# EUROPÄISCHE PATENTSCHRIFT

(11) **EP 0 916 056 B1**
(45) Veröffentlichungstag und Bekanntmachung des Hinweises auf die Patenterteilung: **30.05.2001**
(21) Anmeldenummer: 97938883.2
(22) Anmeldetag: 06.08.1997
(51) Int. Cl.: F16L 27/12

(54) **TELESKOPROHR FÜR INSBESONDERE SPRINKLERANLAGEN**
TELESCOPIC TUBE, IN PARTICULAR FOR SPRINKLER SYSTEMS
TUBE TELESCOPIQUE, NOTAMMENT POUR INSTALLATION A TETES AUTOMATIQUES D'EXTINCTION

(30) Priorität: 09.08.1996 DE 19632133
(43) Veröffentlichungstag der Anmeldung: 19.05.1999
(73) Patentinhaber: Vieregge, Uwe, 63584 Gründau (DE)
(72) Erfinder: Vieregge, Uwe, 63584 Gründau (DE)
(74) Vertreter: Stoffregen, Hans-Herbert, Dr. Dipl.-Phys.
(86) Internationale Anmeldenummer: EP9704295
(87) Internationale Veröffentlichungsnummer: WO9806967

(56) Entgegenhaltungen:
- EP-A- 0 428 120
- EP-A- 0 536 740
- DE-U- 29 514 818
- GB-A- 1 303 043
- US-A- 3 508 428
- US-A- 4 103 937

## Beschreibung

Die Erfindung bezieht sich auf ein Teleskoprohr für insbesondere Sprinkleranlagen umfassend ein Außenrohr und ein zu diesem verstellbares Innenrohr, das einen innerhalb des Außenrohrs verlaufenden Endabschnitt aufweist, der einen zum angrenzenden Bereich des Innenrohrs abweichenden größeren Außendurchmesser aufweist, sowie ein das Innenrohr umgebendes Fixierelement für das Außenrohr, das sich mit seinem äußeren Ende in diesem erstreckt.

Ein entsprechendes Teleskoprohr ist der Figur 1 der EP 0 536 740 A1 zu entnehmen. Das das Außenrohr mit dem Innenrohr fixierende Element ist als Überwurfmutter ausgebildet, mit dem das Außenrohr verschraubbar ist. Die Überwurfmutter selbst ist mittels einer Madeschraube zum Innenrohr fixierbar. Nachteilig einer Befestigung in Form einer Überwurfmutter ist es, dass diese zu fest oder zu lose angezogen werden kann. Letzteres führt dazu, dass das Innenrohr weiterhin zu dem Außenrohr verstellbar ist, wodurch eine bestimmungsgemäße Verwendung eines entsprechenden Teleskoprohrs unmöglich ist. Bei einem zu festen Anziehen der Überwurfmutter ist zwar eine entsprechende Relativbewegung nicht mehr möglich, jedoch besteht die Gefahr, dass eine bleibende Schädigung der Überwurfmutter bzw. dessen Gewindes bzw. des des Außenrohres erfolgt, so dass ein erneutes Lösen und Anziehen zur weiteren Justage der Teleskoprohranordnung nicht möglich ist. Auch nach der EP 0 428 120 A2 oder der US 3,783,178 erfolgt eine Fixierung zwischen Außen- und Innenrohr mittels einer Überwurfmutter.

Nach den Ausführungsformen der Figuren 3 und 4 der EP 0 536 740 1 erfolgt eine Verbindung zwischen Außen- und Innenrohr mittels eines unverlierbar angeordneten Stellrings, der in eine Aufweiterung am Ende des Außenrohrs angeordnet ist. Dabei erfolgt das Fixieren des Stellrings innerhalb des Außenrohrs durch Umbördeln bzw. Zudrücken des Randes des Außenrohrs. Der Innendurchmesser des Stellrings muß dabei kleiner als der Außendurchmesser des Außenrohrs an seinem inneren Ende sein, das wulstartig ausgebildet ist.

Dem DE 295 14 818 U1 ist eine Teleskoprohr-Anordnung zu entnehmen, bei dem ein äußeres Rohr zu einem minleren Rohr über einen Stellring fixiert ist, wie dieser zum Beispiel der EP 0 536 740 B1 zu entnehmen ist.

Die EP 0 472 379 A1 beschreibt eine Verbindung zwischen Rohren mittels eines Kupplungsstückes, innerhalb der eine Hülse verläuft, die an Dichtungen abgestützt ist. Nach der US 3,878,3178 werden axial zueinander verschiebbare Rohre über Schraubverbindungen gesichert.

Das DE-GM 1 814 264 bezieht sich auf ineinander verschiebbare Antennenmastrohre, die gegeneinander unter Preßdruck stehen.

Aus der US 3,508,428 ist eine gattungsfremde Verbindung zwischen starren elektrischen Leitern bekannt, wobei ein ein Außengewinde aufweisendes Schraubelement mit endseitig trompetenartig aufgeweitetem Rand in einen Einsatz eines Verbindungselementes eingebracht wird. Zum Fixieren des Schraubelementes in dem Verbindungselement werden Randabschnitte in Richtung des Schraubelementes umgebogen, um die trompetenartige Erweiterung zu umfassen.

Der vorliegenden Erfindung liegt das Problem zugrunde, ein Teleskoprohr der zuvor beschriebenen Art so weiterzubilden, dass die verwendeten Elemente kostengünstig und präzise herstellbar sind. Auch soll ein problemloses, jedoch genaues Verstellen zwischen Innen- und Außenrohr möglich sein. Ferner soll das Teleskoprohr problemlos im gewünschten Umfang ablängbar sein. Schließlich soll auch bei hohen Druckstößen und Temperaturschwankungen eine Funktionsfähigkeit sichergestellt sein.

Das Problem wird erfindungsgemäß im wesentlichen dadurch gelöst, dass das äußere Ende des Außenrohrs aufgeweitet ist und sich innerhalb einer ringförmigen Aufnahme des Fixierelements erstreckt, dass die ringförmige Aufnahme für den aufgeweiteten Rand des Außenrohres eine innenliegende geneigt zur Rohrlängsachse verlaufende Begrenzungsfläche aufweist, an der der aufgeweitete Rand innenseitig anliegt, und dass das Fixierelement einen außenseitig entlang des Außenrohrs sich erstreckenden äußeren Rand aufweist, der nach in die Aufnahme eingebrachtem äußeren Ende des Außenrohrs zu dessen Sicherung in Richtung des Randes des Außenrohres verformt ist.

Dabei kann der äußere Rand des auch als Montagering zu bezeichnenden Fixierelementes in Richtung des vorzugsweise trompetenartig aufgeweiteten äußeren Endes des Außenrohres umgebogen, umgebördelt oder umgedrückt werden.

Damit das Außenrohr in hinreichendem Umfang in dem Fixierelement gesichert ist, sollte sich der äußere Rand des Fixierelementes bis oder nahezu bis zum Übergang zwischen axial geradlinig verlaufender Außenfläche des Außenrohrs und dessen trompetenförmig aufgeweitetem äußeren Ende erstrecken.

Das Fixierelement selbst ist ein Ringelement, das außenflächig an dem Innenrohr z.B. über ein Schraubelement wie Madeschraube fixierbar ist. Selbstverständlich besteht auch die Möglichkeit, das Ringelement mit dem Innenrohr zu verschrauben.

Die ringförmige Aufnahme selbst kann ein im Schnitt V- oder U-förmiger Einstich sein, dessen rohrseitige Innenfläche zum Innenrohr hin geneigt verläuft. Mit anderen Worten verläuft die innere Begrenzungsfläche unter einem Neigungswinkel in Richtung der Längsachse des Außenrohrs, der dem Verlauf des aufgeweiteten äußeren Endes des Außenrohrs entspricht.

Des Weiteren ist erfindungsgemäß vorgesehen, dass das Innenrohr einen inneren Endabschnitt in Form eines gegenüber diesem abgedichteten Einsatzes aufweist dessen Außendurchmesser über den des Innenrohrs vorsteht und ein umlaufendes gegenüber dem Außenrohr abdichtendes Dichtelement wie O-Ring aufweist. Da der Einsatz bzw. das Endstück, das das innere Ende des Innenrohrs bildet, gegenüber diesem abgedichtet ist, ist folglich das Innenrohr über das Endstück gegenüber dem Außenrohr im erforderlichen Umfang abgedichtet.

Das Endstück kann -wie im übrigen auch die übrigen Teile des Teleskoprohrs- als Automatenteil hergestellt sein, so dass eine kostengünstige und überaus präzise Herstellung erfolgt. Das Endstück ist mit dem Innenrohr verschraubt und durch Kleber oder ähnliches im erforderlichen Umfang abgedichtet.

Das Außenrohr selbst sollte ein ablängbares Gewinderohr sein, dessen Innen- und Außendurchmesser im Überlappungsbereich mit dem Innenrohr erweitert, also kalibriert ist.

Abweichend vom vorbekannten Stand der Technik ist es nunmehr nicht mehr erforderlich, dass das Innenrohr wulstartig aufgeweitet wird, um unverlierbar in dem Außenrohr angeordnet zu werden. Vielmehr ist es nur noch erforderlich, dass das Endstück mit dem Innenrohr verbunden, wie aufgeschraubt, verklebt oder verstaucht wird. Die Unverlierbarkeit ergibt sich dadurch, dass das als Montagering zu bezeichnende Fixierelement einen Innendurchmesser aufweist, der kleiner als der Außendurchmesser des Endstücks ist, wobei der Montagering selbst erwähntermaßen mit dem Innenrohr mittels eines Schraubelementes oder durch Aufschrauben fixierbar ist.

Das als Gewinderohr ausgebildete Außenrohr bedarf nur an seinem Ende einer Aufweitung, die ebenfalls mittels eines Automaten erfolgen kann.

Für den praktischen Einsatz ist es nur erforderlich, das Außenrohr auf die erforderliche Länge abzuschneiden, wobei optisch gekennzeichnet sein soll, wo der kalibrierte Bereich verläuft, innerhalb dessen sich das Innenrohr erstreckt.

Die Erfindung wird nachstehend anhand von bevorzugten Ausführungsbeispielen näher erläutert, aus denen sich weitere Einzelheiten, Vorteile und Merkmale der Erfindung ergeben.

Es zeigen:
Fig. 1 einen Schnitt durch eine erste Ausführungsform eines Teleskoprohrs,
Fig. 2 eine Detaildarstellung des Bereichs X in Fig. 1,
Fig. 3 eine Detaildarstellung des Bereichs Y in Fig. 1 und
Fig. 4 eine alternative Ausführungsform eines Teleskoprohrs im Bereich Y der Fig. 1.

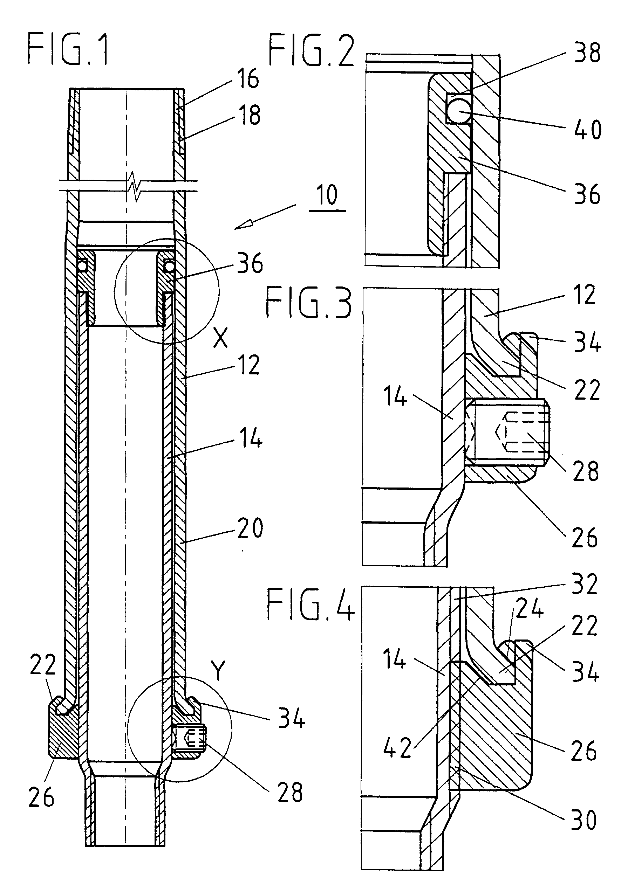

In Fig. 1 ist im Längsschnitt eine Prinzipdarstellung einer erfindungsgemäßen Teleskoprohranordnung 10 dargestellt, die ein Außenrohr 12 und ein Innenrohr 14 umfaßt. Das Außenrohr 12 weist an seinem anschlußseitigen Ende 16 ein Gewinde 18 auf. Im Bereich des anschlußseitigen Endes 16 ist der Innen- und Außendurchmesser des Außenrohrs 12 kleiner als im sich anschließenden Bereich 20, innerhalb dessen das Innenrohr 14 verschiebbar ist. An seinem der Einschnürung 16 gegenüberliegenden äußeren Ende 22 ist das Außenrohr 12 trompetenartig aufgeweitet, weist also eine Aufweitung auf, die sich innerhalb einer ringförmigen Aufnahme 24 eines Montageringes 26 dann erstreckt, wenn das Außenrohr 12 zum Innenrohr 14 fixiert werden soll. Der Montagering 26 und das Innenrohr 14 werden nach den Ausführungsbeispielen der Fig. 1 und 3 über eine Madeschraube 28 zueinander fixiert. Nach dem Ausführungsbeispiel der Fig. 4 weist der Montagering 26 ein Innengewinde 30 auf, welches auf das ein Außengewinde 32 aufweisende Innenrohr 14 schraubbar ist.

Wie insbesondere die Detaildarstellungen der Fig. 3 und 4 verdeutlichen, erhält die ringförmige Aufnahme 24 ihre Endgeometrie dann, wenn das Außenrohr 12 mit seinem aufgeweiteten Rand 22 in die Aufnahme 24 eingebracht und sodann der Montagering 26 mit seinem freien außenseitig entlang des Rands 22 des Außenrohr 12 verlaufenden Wandabschnitt 34 in Richtung des Rands 22 gebogen wie umgebördelt ist und an dessen Außenseite anliegt, wie dies durch die durchgezogene Darstellung in den Fig. 1, 3 und 4 verdeutlicht wird. Hierdurch ist eine eindeutige Fixierung des Außenrohrs in dem Montagering 26 und damit zu dem Innenrohr 14 sichergestellt. Ferner wird aus den

Figuren erkennbar, dass sich der umgebogene Abschnitt 34 bis hin zum Übergangsbereich zwischen abgewinkeltem Rand 22 und axial geradlinig verlaufender Außenfläche des Außenrohrs 12 erstreckt.

Das Außenrohr 12 selbst ist vorzugsweise ein Gewinderohr, dessen Bereich 20 kalibriert ist, um innerhalb von diesem das Innenrohr 14 verstellen zu können. Bei dem Montagering 26 handelt es sich vorzugsweise um ein Automatenteil, das kostengünstig und sehr präzise herstellbar ist.

Auch bei dem Innenrohr 14 kann es sich um ein übliches Rohr handeln, wobei der Außendurchmesser dem Innendurchmesser des Montagerings 26 angepaßt ist. Um ein Herausziehen des Innenrohrs 14 aus dem Montagering 26 und damit dem Innenrohr 12 auszuschließen, weist das Innenrohr 14 innenendseitig einen Endabschnitt in Form eines Endstücks 36 auf, das mit dem Innenrohr 14 durch zum Beispiel Kleben, Schrauben oder Stauchen verbunden und gegenüber diesem in üblicher Weise abgedichtet ist. Der Außendurchmesser des Endstücks 36 ist dabei größer als der des Innenrohrs 14 und damit auch größer als der Innendurchmesser des Montagerings 26, so dass dieser ein Anschlag gegen ein Herausziehen des Innenrohrs 14 bilden kann.

Umfangsseitig weist das Endstück 36 eine in eine Nut 38 eingebrache Dichtung in Form eines O-Rings 40 auf, um das Endstück 36 und damit auch das Innenrohr 14 gegenüber dem Außenrohr 12 abzudichten.

Bei den die erfindungsgemäße Teleskopanordnung 10 bildenden Elementen handelt es sich im wesentlichen um Automatenteile bzw. Standardprodukte wie Gewinderohre, die kalibriert bzw. aufgeweitet werden müssen, um erfindungsgemäß weitergebildet zu werden.

Durch die Aufnahme des trompetenartig aufgeweiteten Endes 22 des Außenrohrs 12 in die entsprechende Aufnahme 24 des Montagerings 26 ist eine einwandfreie Fixierung sichergestellt. Dabei ist der aufgeweitete Rand 22 an einer schräg zur Längsachse der Teleskoprohranordnung, also geneigt verlaufenden Innenfläche 42 der Aufnahme 24 abgestützt, um ein Verformen beim Umbiegen bzw. Umbördeln des äußeren Wandabschnitts 34 des Montagerings 26 auszuschließen.

## Patentansprüche

1. Teleskoprohr (10) für insbesondere Sprinkleranlagen umfassend ein Außenrohr (12) und ein zu diesem verstellbares Innenrohr (14), das einen innerhalb des Außenrohrs verlaufenden Endabschnitt (36) aufweist, der einen zum angrenzenden Bereich des Innenrohrs abweichenden größeren Außendurchmesser aufweist, sowie ein das Innenrohr umgebendes Fixierelement (26) für das Außenrohr, das sich mit seinem äußeren Ende (22) in diesem erstreckt,
**dadurch gekennzeichnet,**
dass das äußere Ende (22) des Außenrohrs (12) aufgeweitet ist und sich innerhalb einer ringförmigen Aufnahme (24) des Fixierelementes (26) erstreckt, dass die ringförmige Aufnahme für den aufgeweiteten Rand des Außenrohres eine innenliegende geneigt zur Rohrlängsachse verlaufende Begrenzungsfläche (42) aufweist, an der der aufgeweitete Rand innenseitig anliegt, und dass das Fixierelement einen außenseitig entlang des Außenrohrs sich erstreckenden äußeren Rand (34) aufweist, der nach in die Aufnahme eingebrachtem äußeren Ende des Außenrohrs zu dessen Sicherung in Richtung des Randes des Außenrohres verformt ist.

2. Teleskoprohr nach Anspruch 1,
**dadurch gekennzeichnet,**
dass sich der äußere Rand (34) des Fixierelementes (26) bis oder nahezu bis zum Übergang zwischen axial geradlinig verlaufender Außenfläche des Außenrohrs (12) und dessen vorzugsweise trompetenförmig aufgeweitetem äußeren Ende (22) erstreckt.

3. Teleskoprohr nach Anspruch 1 oder 2,
**dadurch gekennzeichnet,**
dass das Fixierelement (26) ein Ringelement ist, das zu dem Innenrohr (14) z.B. über ein Schraubelement wie Madeschraube (28) fixierbar ist.

4. Teleskoprohr nach zumindest einem der vorhergehenden Ansprüche,
**dadurch gekennzeichnet,**
dass das Fixierelement (26) auf das Innenrohr (14) geschraubt ist.

5. Teleskoprohr nach zumindest einem der vorgehenden Ansprüche,
**dadurch gekennzeichnet,**
dass das Innenrohr (14) einen inneren Endabschnitt in Form eines mit dem Innenrohr verbindbaren Enstücks (36) aufweist, dessen Außendurchmesser größer als der Innendurchmesser des Fixierelementes (26) ist.

6. Teleskoprohr nach zumindest einem der vorhergehende Ansprüche,
**dadurch gekennzeichnet,**
dass das Endstück (36) mit dem Innenrohr (14) verschraubbar, verklebt oder durch Stauchen verbunden ist.

7. Teleskoprohr nach zumindest einem der vorhergehenden Ansprüche,
**dadurch gekennzeichnet,**
dass das Endstück (36) ein Gewindeaufsatz ist.

8. Teleskoprohr nach zumindest einem der vorhergehenden Ansprüche,
**dadurch gekennzeichnet,**
dass in dem Endstück (36) ein umlaufendes das Innenrohr (14) gegenüber dem Außenrohr (12) abdichtendes Dichtelement wie O-Ring (40) eingelassen ist.

9. Teleskoprohr nach zumindest einem der vorhergehenden Ansprüche,
**dadurch gekennzeichnet,**
dass das Außenrohr (12) ein ablängbares Gewinderohr ist, dessen Innen- und Außendurchmesser im Überlappungsbereich mit dem Innenrohr (14) erweitert ist.

## Claims

1. A telescopic tube (10) for in particular sprinkler systems comprising an outer tube (12) and an inner tube (14) which is movable relative thereto and which has an end section (36) extending inside the outer tube, said section having an outer diameter which is larger than the inner tube in their adjoining regions, and a securing element (26) which surrounds the inner tube for the outer tube, the outer end (22) of the outer tube extends in said securing element,
**wherein**
the outer end (22) of the outer tube (12) is flared and extends inside an annular mounting (24) of the securing element (26), wherein the annular mounting for the flared edge of the outer tube has an inward limiting surface (42) at an angle to the longitudinal axis of the tube and on which the flared edge rests on the inside, and wherein the securing element has an outer edge (34) extending along the outside of the outer tube and is deformed in the direction of the flared edge of the outer tube when the outer end of the outer tube has been inserted into the mounting in order to secure it.

2. Telescopic tube according to Claim 1,
**wherein**
the outer edge (34) of the securing element (26) extends up to or almost up to the transition between the axially straight outer surface of the outer tube (12) and its flared outer end (22).

3. Telescopic tube according to Claim 1 or 2,
**wherein**
the securing element (26) is an annular element that is securable relative to the inner tube (14) for example by a screw element such as a grub screw (28).

4. Telescopic tube according to at least one of the preceding claims,
**wherein**
the securing element (26) is screwed onto the inner tube (14).

5. Telescopic tube according to at least one of the preceding claims,
**wherein**
the inner tube (14) has an inner end section in the form of an end piece (36) connectable to the inner tube and whose outer diameter is greater than the inner diameter of the securing element (26).

6. Telescopic tube according to at least one of the preceding claims,
**wherein**
the end section (36) is connected to the inner tube (14) by screw connection, glueing or compressing.

7. Telescopic tube according to at least one of the preceding claims,
**wherein**
the end section (36) is a threaded attachment.

8. Telescopic tube according to at least one of the preceding claims,
**wherein**
an all-round sealing element such as an O-ring (40) sealing the inner tube (14) from the outer tube (12) is inserted into the end section (36).

9. Telescopic tube according to at least one of the preceding claims,
**wherein**
the outer tube (12) is a threaded tube that can be cut to length and whose inner and outer diameters are widened in the overlap area with the inner tube (14).

## Revendications

1. Tube télescopique (11) notamment pour des installations à têtes automatiques d'extinction comprenant
- un tube extérieur (12) et un tube intérieur (14) réglable par rapport à celui-ci, ce tube intérieur ayant un segment d'extrémité (36) qui vient dans le tube extérieur, et qui a un diamètre extérieur plus grand se réduisant vers la zone limite du tube intérieur,
- ainsi qu'un élément de fixation (26), entourant le tube intérieur et fixant le tube extérieur dont l'extrémité extérieure (22) pénètre dans l'élément de fixation,
caractérisé en ce que
- l'extrémité extérieure (22) du tube extérieur (12) est élargie et s'étend dans un logement annulaire (24) de l'élément de fixation (26),
- le logement annulaire du bord élargi du tube extérieur présente une surface limite (42), inclinée vers l'intérieur par rapport à l'axe longitudinal du tube, et le bord élargi s'appuie intérieurement contre cette surface limite et,
- l'élément de fixation présente un bord extérieur (34) qui s'étend extérieurement le long du tube extérieur, et qui après réception de l'extrémité extérieure du tube extérieur, est déformé en direction du bord du tube extérieur pour le bloquer.

2. Tube télescopique selon la revendication 1,
caractérisé en ce que
le bord extérieur (34) de l'élément de fixation (26) s'étend jusqu'à ou au voisinage de la transition entre la surface extérieure axiale droite du tube extérieur (12) et son extrémité extérieure (22), de préférence élargie en trompette.

3. Tube télescopique selon la revendication 1 ou 2,
caractérisé en ce que
l'élément de fixation (26) est un élément annulaire qui se bloque sur le tube intérieur (14) par exemple par un élément de vissage tel qu'une vis sans tête (28).

4. Tube télescopique selon au moins l'une quelconque des revendications précédentes,
caractérisé en ce que
l'élément de fixation (26) est vissé sur le tube intérieur (14).

5. Tube télescopique selon l'une quelconque des revendications précédentes,
caractérisé en ce que le tube intérieur (14) présente un segment d'extrémité en forme de pièce d'extrémité (36) reliée au tube intérieur et dont le diamètre extérieur est supérieur au diamètre intérieur de l'élément de fixation (26).

6. Tube télescopique selon l'une quelconque des revendications précédentes,
caractérisé en ce que la pièce d'extrémité (36) est reliée au tube intérieur (14) par vissage, collage ou sertissage.

7. Tube télescopique selon l'une quelconque des revendications précédentes,
caractérisé en ce que
la pièce d'extrémité (36) comporte un filetage.

8. Tube télescopique selon l'une quelconque des revendications précédentes,
caractérisé en ce qu' un élément d'étanchéité tel qu'un joint torique (40) est placé dans la pièce d'extrémité (36) pour entourer le tube intérieur (14) et en assurer l'étanchéité par rapport au tube extérieur (12).

9. Tube télescopique selon l'une quelconque des revendications précédentes,
caractérisé en ce que
le tube extérieur (12) est un tube fileté, coupé à la longueur et dont le diamètre intérieur et le diamètre extérieur sont élargis dans la zone de chevauchement du tube intérieur (14).
